# EUROPÄISCHE PATENTSCHRIFT

(11) **EP 2 557 934 B1**
(45) Veröffentlichungstag und Bekanntmachung des Hinweises auf die Patenterteilung: **15.02.2017**
(21) Anmeldenummer: 11714274.5
(22) Anmeldetag: 13.04.2011
(51) Int. Cl.: A21C 5/04, A21C 7/00

(54) **TEIL- UND WIRKTROMMEL**
PORTIONING AND KNEADING DRUM
TAMBOUR DIVISEUR ET PÉTRISSEUR

(30) Priorität: 16.04.2010 AT 6272010
(43) Veröffentlichungstag der Anmeldung: 20.02.2013
(73) Patentinhaber: König Maschinen Gesellschaft mbH, 8045 Graz (AT)
(72) Erfinder: SAUSENG, Robert, A-8061 St. Radegund (AT); BAJREKTAREVIC, Zlatko, A-8020 Graz (AT)
(74) Vertreter: Margotti, Herwig Franz
(86) Internationale Anmeldenummer: PCT/EP2011/055759
(87) Internationale Veröffentlichungsnummer: WO 2011/128351

(56) Entgegenhaltungen:
- WO-A1-93/00818
- DE-A1- 10 305 378
- DE-A1-102006 018 626
- GB-A- 2 134 031

## Beschreibung

Die Erfindung betrifft eine Vorrichtung zum Portionieren und Wirken von Teig gemäß dem Oberbegriff des Anspruchs 1. Eine solche Vorrichtung ist aus WO 93/00818 A1 bekannt.

Aus dem Stand der Technik sind zahlreiche Ausführungsformen an Vorrichtungen zum Portionieren und Wirken von Teig bekannt. Beispielsweise ist aus dem Dokument EP 0 643 914 B1 eine Messkammerteigteilmaschine mit einem Messkammerträger bekannt, in dem in einer Reihe mehrere mit Füllkolben ausgerüstete Füllkammern angeordnet sind.

Die Messkammerteigteilmaschine besteht im Wesentlichen aus zumindest einer Füllkammer mit einem darin axial vor und zurück beweglichen Füllkolben. Auf dem Gehäuse der Füllkammer bzw. des Füllkolbens ist ein Teigtrichter aufgesetzt. An der stirnseitigen Öffnung der Füllkammer ist ein drehbar verschwenkbarer Messkammerträger mit einem innenliegenden Messkolben, welcher eine Messkammer mit veränderlichem Messvolumen bildet, angeordnet. Unterhalb des Messkammerträgers befindet sich eine Wirktrommel mit Wirkband sowie mit anschließenden Spreizbändern zum Abtransport der Teiglinge.

Die Funktionsweise der in EP 0 643 914 B1 gezeigten Verwiegeeinheit mit einem verschwenkbaren Messkammerträger ist an sich bereits aus dem Dokument DE 3530724 C1 bekannt.

Vor einem Teigwechsel oder vor jeder längeren Stillsetzung der Messkammerteigteilmaschine müssen jeweils die Messkammer bzw. der Messkolben sowie die Füllkammer bzw. der Füllkolben gereinigt oder gegebenenfalls auch gewechselt werden.

Dazu muss die Verwiegeeinheit der Messkammerteigteilmaschine in ihre Reinigungsstellung gebracht werden. Zur rascheren Positionierung in die jeweilige Reinigungsstellung ist die aus EP 0 643 914 B1 bekannte Messkammerteigteilmaschine mit einem Schalter versehen, der die Teigteilmaschine in ihrer Ausbaustellung der Messkolben oder des Füllkolbens anhält.

Nachteilig an dieser Ausführung ist, dass bei anderen Teigteilgewichten, die nicht mehr im Hubverstellungsbereich der Messkolben liegen, die komplette Verwiegeeinheit samt dem verschwenkbaren Messkammerträger gegen eine andere Einheit mit entsprechend größeren oder kleineren Messkammern ausgetauscht werden muss.

Das Dokument DE 100 09 300 C2 beschreibt ein Verfahren und eine Vorrichtung zum Herstellen von gleich großen runden Teigstücken. Teig gelangt dabei aus einem Vorratstrichter in eine darunter gelegene Hauptkammer und wird aus dieser mittels eines horizontal verschiebbaren Hauptkolbens in Teigkammern, die radial befüllbar an einer Wirktrommel angeordnet sind, eingebracht. Im Inneren der Teigkammern sind stirnseitig verstellbare Teigkammerkolben vorgesehen. Das freie Volumen der Teigkammern kann durch die Teigkammerkolben in einem gewissen Bereich verstellt und somit die Portionsgröße der einzelnen Teiglinge beeinflusst werden. Ein Wirkband zum Verschließen der Teigkammern ist nur entlang eines kurzen Umfangabschnitts der Wirktrommel erforderlich.

Weiters ist aus dem Dokument WO 01/76374 A1 eine Vorrichtung zum Portionieren und Wirken von Teig bekannt, die eine Lösung der Aufgabe bietet, den an der Wirkstelle auf das Teigstück einwirkenden Wirkdruck unabhängig von der Verdrehung der Zwangsführung ändern zu können, um die Wirkergebnisse zu verbessern sowie den Wirkdruck an unterschiedliche Teigvolumina bzw. Teigqualitäten anpassen zu können. Dazu ist im Inneren einer Wirktrommel eine Kurvenbahn vorgesehen, die eine Zwangsführung der mit einem Gestänge verbundenen Kolben in den einzelnen Teigkammern bewirkt.

Außerdem ist aus dem Dokument DE 10 2006 018 626 A1 eine Portioniereinheit bekannt, bei der zu Reinigungszwecken jeweils linienförmige Zylinderleisten in radialer Richtung einer Teigtrommel entnommen werden können. Diese Vorrichtung dient nur zum Portionieren von Teig. Ein Wirken der Teiglinge ist mit der Portioniereinheit nicht möglich.

Weiters ist aus dem Dokument DE 103 05 378 A1 eine Portioniereinheit bekannt, bei der zu Reinigungszwecken einzelne Teigkammern einer Teiltrommel in radialer Richtung entnommen werden können. Ein Wirken der Teiglinge ist mit der Portioniereinheit nicht möglich.

Nachteilig an diesen Ausführungen ist, dass bei Teigteilgewichten, die nicht mehr im Hubverstellungsbereich der Teigkammerkolben bzw. Messkolben liegen, jeweils die komplette Verwiegeeinheit bzw. die komplette Wirktrommeleinheit gegen eine andere Einheit mit entsprechend größeren oder kleineren Messkammern ausgetauscht werden müssen. Aufgrund der meist sehr aufwändigen Verstellmechanik ist ein kompletter Wechsel einer Wirktrommeleinheit bzw. einer Verwiegeeinheit besonders zeit- und kostenintensiv und kann nur durch eigens geschultes Wartungspersonal durchgeführt werden. Weiters ist von Nachteil, dass es bei diesen Ausführungen, insbesondere wenn mit einer Teigteil- und Wirkvorrichtung häufig unterschiedliche Teige in variierenden Portionsgrößen verarbeitet werden sollen, bei jedem Wechsel der Wirktrommeleinheit bzw. Verwiegeeinheit jeweils zu längeren Betriebsstillständen kommt.

Die vorliegende Erfindung stellt sich daher die Aufgabe, für Portionier- und Wirkvorrichtungen von Teig der eingangs genannten Art die aus dem Stand der Technik bekannten Nachteile zu vermeiden. Diese Aufgabe wird bei einer Aufbereitungsvorrichtung gemäß dem Oberbegriff des Anspruches 1 mit den Merkmalen des kennzeichnenden Teiles des Anspruchs 1 gelöst. Die Unteransprüche betreffen besonders vorteilhafte Ausgestaltungen der Erfindung.

Besonders vorteilhaft ist bei einer erfindungsgemäßen Vorrichtung zum Portionieren und Wirken von Teig, mit einer um eine Antriebswelle durch einen Hauptantrieb schrittweise drehbaren Kammertrommel, die an ihren Umfangsabschnitten mit Aufnahmekammern für die zu wirkenden Teigportionen versehen ist, wobei in jeder Aufnahmekammer ein oder mehrere Verwiegestempel in radialer Richtung der Kammertrommel durch bewegungsmäßige Koppelung mit einer Steuereinrichtung verschiebbar ist/sind, zumindest ein Umfangsabschnitt der Kammertrommel, der zumindest eine Aufnahmekammer aufweist, zusammen mit dem in der Aufnahmekammer befindlichen Verwiegestempel in axialer Richtung abziehbar und aufsteckbar ausgeführt.

Besonders vorteilhaft wird die Wechselarbeit der Kammertrommel bei einer erfindungsgemäßen Vorrichtung somit mit wenigen Handgriffen sicher und effizient ausgeführt. Ein speziell geschultes Bedienungspersonal ist für das Auswechseln der Kammertrommel somit nicht erforderlich.

Zweckmäßig ist bei einer erfindungsgemäßen Vorrichtung zumindest ein Umfangsabschnitt der Kammertrommel als auswechselbarer Wechseleinsatz mit Wechseleinsatzführungen versehen formschlüssig in Kammertrommelführungen der Kammertrommel ein- und ausschiebbar ausgeführt.

Derartige Wechseleinsätze bieten den Vorteil, dass für unterschiedliche Teiggewichte bzw. unterschiedliche Größen und Formen an Teigportionen jeweils eigene Wechseleinsätze äußerst komfortabel sowie rasch austauschbar sind. Aufgrund der formschlüssigen Führungen an den Wechseleinsätzen, die in komplementär passende Führungen an der Kammertrommel ein- und ausschiebbar befestigbar sind, wird bei dieser Ausführung einer erfindungsgemäßen Vorrichtung vorteilhaft die Rüstzeit stark reduziert. Die Wirtschaftlichkeit der Vorrichtung sowie der erzielbare Durchsatz an Teigportionen werden aufgrund der verkürzten Betriebsunterbrechungen während des Umrüstens deutlich erhöht.

Weiters wird der verstellbare Gewichtsbereich der Teigportionsgrößen, der in den bisher aus dem Stand der Technik bekannten Teigteilsystemen aufgrund der Geometrie eines verstellbaren Drehschiebers oder eines Messkolbens limitiert war, mit einer erfindungsgemäßen Vorrichtung deutlich vergrößert, was einen weiteren Vorteil der Erfindung darstellt.

Beispielsweise kann eine Vorrichtung mit einem Wechseleinsatz mit einer einzigen, großen Aufnahmekammer zum Teilen und Wirken von Teigportionen für große Brotlaibe dienen. Weitere Wechseleinsätze können beispielsweise jeweils mehrere kleine Aufnahmekammern aufweisen, die jeweils reihenförmig nebeneinander an einem Umfangsabschnitt des Wechseleinsatzes bzw. der Kammertrommel angeordnet sind. Solcherart können beispielsweise zweireihig - mit zwei nebeneinander angeordneten Aufnahmekammern - oder mehrreihig - mit beispielsweise drei oder mehreren nebeneinander angeordneten Aufnahmekammern - auch unterschiedlich große Teigportionen für Kleingebäck mit derselben Vorrichtung portioniert werden.

In einer erfindungsgemäßen Ausführungsvariante der Vorrichtung ist die gesamte Kammertrommel zusammen mit sämtlichen in den Aufnahmekammern befindlichen Verwiegestempeln in axialer Richtung abziehbar und aufsteckbar ausgeführt.

Diese Ausführungsvariante bietet den Komfort, dass die Kammertrommel zusammen mit sämtlichen Verwiegestempeln rasch auswechselbar ausgeführt ist. Solcherart wird die Rüstzeit bzw. die Unterbrechungsdauer des laufenden Betriebs weiter reduziert und unterschiedlich gestaltete Kammertrommeln mit ein- oder mehrreihig nebeneinander angeordneten Aufnahmekammern können je nach herzustellendem Produkt sehr schnell durch Auswechseln an die jeweils erforderlichen Teigportionsgrößen angepasst werden.

Je nach Ausführungsvariante der Kammertrommel kann der Verstellmechanismus zur Bewegung der Verwiegestempel in den Aufnahmekammern ortsfest am Gestell der Vorrichtung befestigt bleiben. Im Wesentlichen wird dabei nur die Kammertrommel samt den Verwiegestempeln ausgewechselt. Alternativ dazu kann auch der Verstellmechanismus zur Bewegung der Verwiegestempel, beispielsweise also die Hebelwellen samt der Steuereinrichtung, als Einheit jeweils innerhalb der Kammertrommel angeordnet und gemeinsam mit der Kammertrommel auswechselbar ausgeführt sein.

Vorteilhaft ist bei einer erfindungsgemäßen Vorrichtung jeder Verwiegestempel mittels einer Hebelwelle, die an einem ihrer Hebelwellenenden mit einer Kurvenrolle zur formschlüssigen Aufnahme in einer kurvenförmig gekrümmten Zwangsführung einer Steuereinrichtung versehen ist, bewegungsmäßig mit der Steuereinrichtung gekoppelt.

Die Hebelwellen werden durch die Zwangsführung der Steuereinrichtung somit synchronisiert zueinander bewegt und gewährleisten eine korrekte Verschiebung der Verwiegestempel innerhalb der jeweiligen Aufnahmekammern entsprechend der gerade aktuellen Position an der verdrehbaren Kammertrommel. Je nach Position der umlaufenden Kammertrommel wird die Kammertiefe der Aufnahmekammern zur Teigaufnahme, die jeweils von den Innenwandungen der Aufnahmekammern und der äußeren Stirnfläche des beweglichen Verwiegestempels definiert wird, durch die jeweilige Stellung der Hebelwellen bestimmt.

Besonders zweckmäßig sind in einer Variante einer erfindungsgemäßen Vorrichtung zumindest zwei Verwiegestempel, die jeweils in reihenförmig nebeneinander angeordneten Aufnahmekammern eines Umfangsabschnitts der Kammertrommel vorgesehen sind, mittels einer gemeinsamen Hebelwelle bewegungsmäßig mit der Steuereinrichtung gekoppelt.

Insbesondere bei zwei oder mehreren jeweils reihenförmig nebeneinander angeordneten Aufnahmekammern, die an einem Umfangsabschnitt einer auswechselbaren Kammertrommel oder an einem austauschbaren Wechselabschnitt vorgesehen sind, ist es von Vorteil, wenn diese Aufnahmekammern synchron jeweils von einer gemeinsamen Hebelwelle bewegt werden.

Zweckmäßig ist bei einer Vorrichtung gemäß der Erfindung jeder Verwiegestempel durch mechanische Anschläge und/oder durch Magnethalterungen gegen Herausfallen aus der Aufnahmekammer gesichert.

Derartig vor Herausfallen gesicherte Verwiegestempel bieten während des Rüstens einen besonders hohen Bedienungskomfort. Die Verwiegestempel eines Wechseleinsatzes oder einer Kammertrommel bleiben somit in ihrer Lage innerhalb der Aufnahmekammern in Position, was weiters Vorteile beim Handling und bei der Lagerung bei Nichtbenutzung bietet. Unterschiedlich gestaltete Kammertrommeln können somit als auswechselbare Einheiten direkt bei der Vorrichtung aufbewahrt werden, ohne dass Verwiegestempeln versehentlich vertauscht oder verloren werden. Zum Reinigen können die Verwiegestempel sehr einfach händisch aus den Aufnahmekammern entnommen und nach der Reinigung auch wieder in die Aufnahmekammern eingeführt werden.

Vorteilhaft berührt bei einer erfindungsgemäßen Vorrichtung jeder Verwiegestempel an seinem Stempelhals die Hebelwelle zumindest während einer mit Teig befüllten Position der Aufnahmekammer.

Diese Ausführung bietet gegenüber den bisher aus dem Stand der Technik bekannten Ausführungen, bei denen der Verwiegestempel beispielsweise mittels eines Gestänges oder mit einer Halterung mit der Hebelwelle verbunden ist, unter anderem den Vorteil, dass hier der Verwiegestempel während einer mit Teig befüllten Position der Aufnahmekammer nur berührend an der Hebelwelle anliegt. Die Hebelwelle dient daher im Prinzip als Impulsgeber für den Verwiegestempel und schiebt diesen innerhalb der Aufnahmekammer in radialer Richtung nach außen. Durch den in der Aufnahmekammer befüllten Teig wird der Verwiegestempel gegen die Hebelwelle gedrückt und berührt diese. Aufgrund der hier fehlenden mechanischen Koppelung des Verwiegestempels mit der Hebelwelle, beispielsweise durch ein Gestänge, kann die Kammertrommel samt den in den Aufnahmekammern befindlichen Verwiegestempeln besonders komfortabel in axialer Richtung von der Vorrichtung bzw. von den Hebelwellen, die beispielsweise am Gestell der Vorrichtung befestigt sind, abgezogen werden.

Zweckmäßig ist bei einer Vorrichtung gemäß der Erfindung die drehbar beweglich gelagerte Kammertrommel an einem Verbindungsflansch lösbar befestigbar.

Der Verbindungsflansch wiederum ist mit einem Hauptantrieb beispielsweise mittels eines Getriebes verbunden. Sämtliche bekannte Schnellverschlüsse zur rasch lösbaren Befestigung der Kammertrommel am Verbindungsflansch können hier eingesetzt werden und sind von der Erfindung mitumfasst. Somit ist ein schneller Wechsel der Kammertrommel vom Antrieb bzw. von der Vorrichtung möglich.

Vorteilhaft sind bei einer erfindungsgemäßen Vorrichtung der Verbindungsflansch sowie die Steuereinrichtung mittels eines Getriebes mit einem Antrieb gekoppelt.

Die Steuereinrichtung, welche eine kurvenförmig gekrümmte Kurvenbahn als Zwangsführung zur formschlüssigen Aufnahme der Hebelwellenenden aufweist, sowie der Verbindungsflansch zur lösbaren Befestigung der Kammertrommel, sind mittels eines Getriebes mit einem Antrieb versehen, der vorzugsweise vom Hauptantrieb entkoppelt ist.

Die Steuereinrichtung sowie der Verbindungsflansch können mittels Getriebe beispielsweise mit einer Relativgeschwindigkeit zueinander bewegt werden.

Besonders vorteilhaft ist bei einer erfindungsgemäßen Vorrichtung zumindest eine Sicherungseinrichtung zur Sicherung der Kammertrommel und/oder der Wechseleinsätze in Einbaulage vorgesehen.

Eine Sicherungseinrichtung kann beispielsweise einen Verriegelungsring umfassen, der stirnseitig an der Kammertrommel oder an einer entsprechend geeigneten Stelle am Gestell der Vorrichtung befestigt ist und die Position der drehbaren Kammertrommel und/oder der Wechseleinsätze in Einbaulage sichert. Es sind dabei unterschiedlichste Ausführungsarten einer Sicherungseinrichtung denkbar.

Zweckmäßig ist bei einer Vorrichtung gemäß der Erfindung zumindest eine Überwachungseinrichtung zur Überwachung der Einbaulage der Kammertrommel und/oder der Wechseleinsätze vorgesehen.

Mittels einer Überwachungseinrichtung wird verhindert, dass die Vorrichtung nach dem Austausch der Kammertrommel oder den Wechseleinsätzen auch dann in Betrieb genommen werden kann, wenn die Kammertrommel oder die Wechseleinsätze sich nicht in Einbaulage befinden sollten. Bei einer Kammertrommel mit auswechselbaren Wechseleinsätzen wird somit beispielsweise verhindert, dass bei fehlenden Wechseleinsätzen Teig in den im Inneren der Kammertrommel angeordneten Verstellmechanismus der Verwiegestempel gelangt und derart zu einer Beschädigung der Vorrichtung führt.

In einer Weiterbildung der Vorrichtung umfasst die Überwachungseinrichtung zumindest einen Lageerkennungssensor, vorzugsweise einen optischen und/oder kapazitiven und/oder piezoelektrischen und/oder induktiven Lageerkennungssensor.

Dieser zumindest eine Lageerkennungssensor ist beispielsweise am Gehäuse der Vorrichtung befestigt und erkennt die Lage der Kammertrommel und/oder der Wechseleinsätze in Einbaulage. Sollte der Lageerkennungssensor einen Fehler der Einbaulage der zu überwachenden Bauteile erkennen, so wird beispielsweise ein Fehlersignal an eine Steuerung übermittelt und die Vorrichtung kann nicht in Betrieb genommen werden.

Von Vorteil ist bzw. sind bei einer erfindungsgemäßen Vorrichtung die Kammertrommel und/oder die Wechseleinsätze aus dafür geeignetem Kunststoff oder einem mit Kunststoff beschichteten Material, das vorzugsweise Teig abweisend ist, hergestellt.

Besonders zweckmäßig ist bzw. sind bei einer Vorrichtung gemäß der Erfindung die Kammertrommel und/oder die Wechseleinsätze aus einem Werkstoff enthaltend Aluminium hergestellt.

Die Kammertrommel und/oder die Wechseleinsätze sind dabei beispielsweise aus Aluminiumstranggussprofilen hergestellt. Auch die Verwendung von Werkstoffen aus Aluminiumlegierungen zur Herstellung der Kammertrommel und/oder der Wechseleinsätze ist von der Erfindung umfasst.

In einer erfindungsgemäßen Ausführungsvariante der Vorrichtung ist zur Lagerung der Antriebswelle an seinem freien Antriebswellenende ein Lagerbügel befestigbar.

Insbesondere bei Kammertrommeln mit großer Baulänge, die beispielsweise vielreihige Aufnahmekammern tragen, ist ein zweites Lager, beispielsweise ein Wälzlager, zur Lagerung der Antriebswelle besonders vorteilhaft.

Zusammenfassend bietet die erfindungsgemäße Vorrichtung weiters den Vorteil, dass unterschiedlichste Ausführungsformen von erfindungsgemäßen Kammertrommeln, die mit oder ohne auswechselbaren Wechseleinsätzen versehen sein können, sehr rasch und wirtschaftlich umgerüstet werden können. Der geometrischen Anordnung der Aufnahmekammern bzw. der darin befindlichen Verwiegestempel am Umfang der auswechselbaren Kammertrommel bzw. an den auswechselbaren Wechseleinsätzen sind hier keine Grenzen gesetzt. Die Aufnahmekammern können dabei ein-, zwei- oder mehrreihig nebeneinander bzw. in axialer Richtung reihenförmig am Umfang der Kammertrommel angeordnet sein.

Auch der Abstand in Umfangsrichtung zwischen den einzelnen, in axialer Richtung beispielsweise reihenförmig nebeneinander angeordneten Aufnahmekammern kann je nach Bedarf verändert werden. Von der Erfindung sind beispielsweise Kreisteilungen zwischen zwei benachbarten ein- oder mehrzeilig angeordneten Reihen an Aufnahmekammern, die jeweils um die Umfangshälfte, um ein Umfangsdrittel, ein Viertel, oder auch ein Fünftel, Sechstel usw. des Umfangs zueinander versetzt sind, umfasst. Im Prinzip sind die Reihen an Aufnahmekammern gleichmäßig jeweils in einer ganzzahligen Kreisteilung über den Umfang der Kammertrommel verteilt angeordnet. Kammertrommeln können beispielsweise nur zwei, drei oder vier Aufnahmekammern aufweisen, die einreihig in gleichmäßiger Kreisteilung entlang des Umfangs der Kammertrommel angeordnet sind. Ebenso können Kammertrommeln für die Portionierung von Kleingebäck vielreihig nebeneinander angeordnet jeweils mehrere Aufnahmekammern aufweisen, wobei die Reihen beispielsweise in Umfangsrichtung jeweils in einem Umfangssechstel voneinander beabstandet angeordnet sind.

Weiters können die Aufnahmekammern unterschiedliche Querschnittsgeometrien aufweisen. Beispielsweise sind kreisförmig oder ovale sowie polygone Querschnittsgeometrien der Aufnahmekammern denkbar. Die Verwiegestempel sind dabei jeweils so geformt, dass sie innerhalb der Aufnahmekammern in deren Längsrichtung beweglich sowie bündig mit den Innenwänden der Aufnahmekammern abschließend geführt sind. Somit wird vermieden, dass Teig in einem Spalt zwischen den Verwiegestempeln und den Aufnahmekammern in den dahinter gelegenen Innenraum der Kammertrommel gelangt.

Weitere Merkmale der Erfindung ergeben sich aus der nachfolgenden Beschreibung von Ausführungsbeispielen und unter Bezugnahme auf die schematischen Zeichnungen.

Es zeigen:
- Fig. 1 eine erste Ausführungsvariante einer Kammertrommel einer erfindungsgemäßen Vorrichtung in einer Detailansicht schräg von vorne;
- Fig. 2 die in Fig. 1 gezeigte Ausführungsvariante in einer Schnittdarstellung schräg von der Seite;
- Fig. 3 die in Fig. 2 gezeigte Ausführungsvariante mit abgezogenen Wechseleinsätzen in einer Schnittdarstellung schräg von der Seite;
- Fig. 4, Fig. 5 und Fig. 6 unterschiedliche Ausführungsvarianten an austauschbaren Wechseleinsätzen, jeweils passend zum Einsatz in die in den Fig. 1 bis Fig. 3 gezeigte Kammertrommel;
- Fig. 7 eine Variante der in Fig. 1 gezeigten Kammertrommel in einer Detailansicht von vorne;
- Fig. 8 eine weitere Ausführungsvariante einer erfindungsgemäßen Vorrichtung in einer Schnittansicht schräg von der Seite;
- Fig. 9 die in Fig. 8 dargestellte Vorrichtung mit abgezogener Kammertrommel in einer Detailansicht schräg von vorne;
- Fig. 10 im Detail die in Fig. 8 dargestellte Kammertrommel;
- Fig. 11 eine weitere Ausführungsvariante einer erfindungsgemäßen Vorrichtung in einer Schnittansicht von der Seite;
- Fig. 12 die in Fig. 11 gezeigte Vorrichtung mit abgezogener Kammertrommel in einer Detailansicht von vorne;
- Fig. 13 in einer Detaildarstellung die in Fig. 11 gezeigte Kammertrommel.

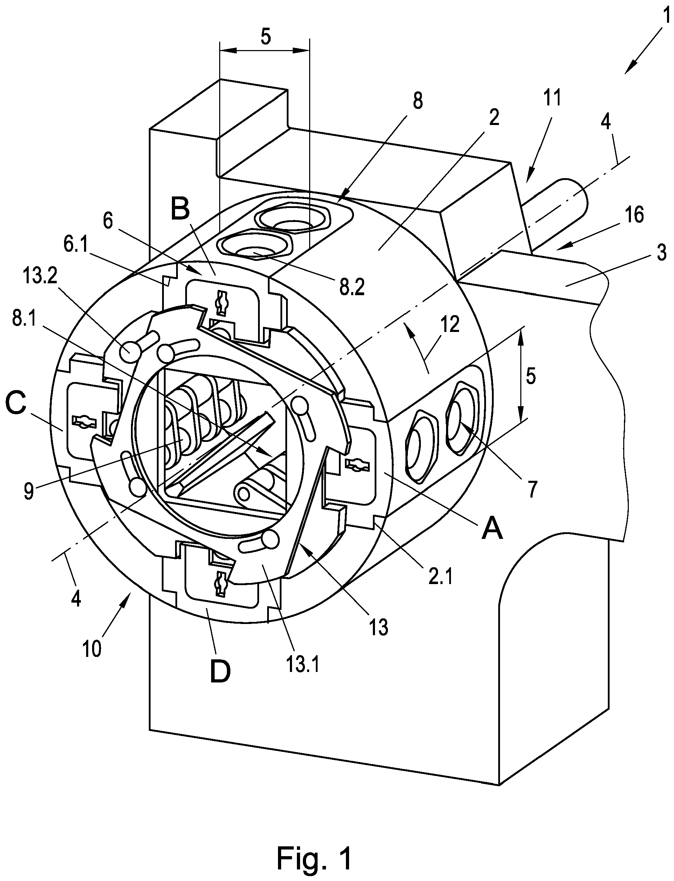

Fig. 1 zeigt in einer Schrägansicht eine erfindungsgemäße Vorrichtung 1 mit einer Detailansicht einer Kammertrommel 2. Die Vorrichtung 1 hat ein Gestell 3, in welchem die Kammertrommel 2 um eine Achse 4 drehbar gelagert ist. Die Kammertrommel 2 weist an ihrem Umfang an mehreren Umfangsabschnitten 5, die als Wechseleinsätze 6 in axialer Richtung auswechselbar vorgesehen sind, jeweils beispielsweise zwei reihenförmig nebeneinander angeordnete Aufnahmekammern 7 auf. Die Aufnahmekammern 7 bzw. die Wechseleinsätze 6 sind über den Umfang der Kammertrommel 2 gleichmäßig verteilt. In den Aufnahmekammern 7 befinden sich jeweils bewegliche Verwiegestempel 8, die von mehreren im Innenraum der Kammertrommel 2 angeordneten Hebelwellen 9 jeweils in ihrer Lage innerhalb der Aufnahmekammer 7 gesteuert werden.

Zur besseren Übersicht sind die Abdeckungen bzw. Bauteile eines Gehäuses 10 der Vorrichtung 1 nicht dargestellt. Die Kammertrommel 2 wird durch einen Hauptantrieb 11 schrittweise in stets der gleichen Richtung 12 weiter gedreht. Dabei gelangt ein zu verarbeitender Teig von außen beispielsweise durch eine nicht dargestellte Teigfördereinrichtung, beispielsweise durch einen Teigförderkolben, an die mit Position A gekennzeichneten Aufnahmekammern 7 der drehbaren Kammertrommel 2. Die beweglichen Verwiegestempel 8 werden in der Lage von Position A, die als Teigfüllposition bezeichnet wird, durch den zugeführten Teig in radialer Richtung in die Aufnahmekammern 7 gedrückt, bis die Verwiegestempel 8 mit ihrem innenliegenden Stempelhals bzw. mit ihrer inneren Stirnfläche 8.1 jeweils an einer Hebelwelle 9 anstehen. Das Teigvolumen, das in Position A jeweils in einem Hohlraum, der durch die Aufnahmekammer 7 sowie die äußere Stirnfläche 8.2 des nach innen gedrückten Verwiegestempels 8 gebildet ist, aufgenommen wird, lässt sich dabei durch die jeweils eingestellte Position der Hebelwelle 9, welche einen verstellbaren Anschlag für die innere Stirnfläche 8.1 der Verwiegestempel 8 bildet, verändern.

Der in die Aufnahmekammern 7 eingedrückte Teig wird bei der Weiterbewegung der Kammertrommel 2 in Drehrichtung 12 beispielsweise durch eine hier nicht dargestellte Abscherkante abgeschert. Dabei erfolgt die eigentliche Portionierung der Teigstücke. Die beiden in den Aufnahmekammern 7 befindlichen Teigstücke gelangen nach einer Drehung der Kammertrommel 2 um 90° in die gekennzeichnete Position B, die auch als Wirkposition bezeichnet wird. Dabei werden die in den Aufnahmekammern 7 befindlichen Teigstücke beispielsweise von außen mittels einer nicht gezeigten Wirkeinrichtung durch eine kreisende Bewegung eines Wirkwerkzeugs der Wirkeinrichtung gewirkt. In Position B erfolgt beispielsweise im Laufe des Wirkvorgangs ein weiteres Eindrücken des Verwiegestempels 8 innerhalb der Aufnahmekammern 7, indem die Hebelwelle 9 während des Wirkvorgangs entsprechend verstellt wird. Der durch den Verwiegestempel 8 begrenzte, somit vergrößerte Hohlraum innerhalb der Aufnahmekammer 7 bietet dem gewirkten Teigstück vorteilhaft mehr Platz.

Die Kammertrommel 2 wird nach dem Wirkvorgang in Drehrichtung 12 erneut um 90° weitergedreht und der mit den beiden Aufnahmekammern 7 versehene Wechseleinsatz 6 gelangt in die mit Position C gekennzeichnete Teigausschiebeposition. Die Hebelwelle 9 wird dabei so verstellt, dass die Verwiegestempel 8 in radialer Richtung nach außen geschoben werden und die äußere Stirnfläche der beiden Verwiegestempel 8 jeweils bündig mit der Umfangsfläche der Kammertrommel 2 ist. Die fertig portionierten und gewirkten Teigstücke werden in Position C durch die aus den Aufnahmekammern 7 nach außen geschobenen Verwiegestempel 8 beispielsweise auf ein nicht dargestelltes Förderband übergeben.

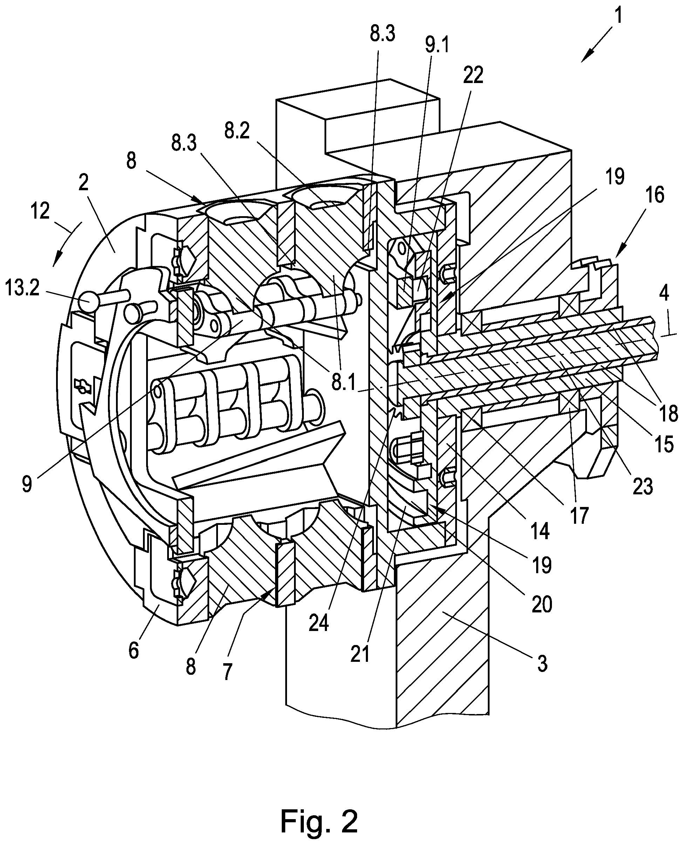

In Position D sind die beiden Aufnahmekammern 7 ohne Teigfüllung. Aufgrund der Schwerkraft befinden sich in dieser Position die Verwiegestempel 8 in den Aufnahmekammern 7 in radial nach außen bzw. nach unten geschobener Lage. Die Verwiegestempel 8 sind dabei gegen Herausfallen aus der jeweiligen Aufnahmekammer 7 mit einem mechanischen Anschlag 8.3 versehen. Dieser mechanische Anschlag 8.3 ist im Detail in Fig. 2 zu sehen und befindet sich nahe der inneren Stirnfläche 8.1 der Verwiegestempel 8. Weiters können die Verwiegestempel 8 beispielsweise auch jeweils durch eine Magnethalterung gegen Herausfallen aus der jeweiligen Aufnahmekammer 7 gesichert sein.

Die Position D bietet sich daher besonders als Wechselposition zum Ein- und Ausschieben der austauschbaren Wechseleinsätze 6 an. Die Wechseleinsätze 6 sind an ihren beiden gegenüberliegenden Längsseiten mit Wechseleinsatzführungen 6.1 versehen, die formschlüssig in Kammertrommelführungen 2.1 der Kammertrommel 2 einsteckbar sind. Zum Auswechseln der Wechseleinsätze 6 muss eine Sicherungseinrichtung 13, die einen stirnseitig an der Kammertrommel 2 befestigten Verriegelungsring 13.1 umfasst, entsprechend arretiert werden. Dazu wird beispielsweise ein Rastbolzen 13.2, der im Betriebszustand den Verriegelungsring 13.1 vor Verschieben sichert, geöffnet und der Verriegelungsring 13.1 innerhalb einer von Langlochschlitzen gebildeten Führung verdreht, sodass die Schlitten der Wechseleinsätze 6 jeweils in Position D der Kammertrommel 2 aus den entsprechenden Kammertrommelführungen 2.1 herausgezogen werden können.

Die hier gezeigten Wechseleinsätze 6, die jeweils zwei Aufnahmekammern 7 aufweisen, können sehr einfach beispielsweise gegen weitere Wechseleinsätze 6 mit jeweils einer großen Aufnahmekammer 7 oder alternativ dazu mit jeweils drei oder mehreren kleineren Aufnahmekammern 7 ausgetauscht werden. Zum Reinigen können die Verwiegestempel 8 aus den Aufnahmekammern 7 der abgezogenen Wechseleinsätze 6 entnommen werden.

Die hier gezeigte Ausführung mit Wechseleinsätzen 6, die jeweils zwei Aufnahmekammern 7 tragen und jeweils in Viertelteilung des Umfangs der Kammertrommel 2, also jeweils um 90° versetzt, angeordnet sind, ist nur ein mögliches Ausführungsbeispiel. Ebenso können die Wechseleinsätze 6 beispielsweise jeweils mehr als zwei Aufnahmekammern 7 tragen oder es können Wechseleinsätze 6 beispielsweise jeweils in Sechstel- oder Achtelteilung des Umfangs der Kammertrommel 2, also jeweils um 60° bzw. um 45° versetzt, an einer Kammertrommel angeordnet sein. Diese Ausführungen werden nicht explizit in den Figuren gezeigt.

Fig. 2 zeigt die aus Fig. 1 bekannte Kammertrommel 2 einer erfindungsgemäßen Vorrichtung 1 in einer Schnittansicht schräg von der Seite.

Die Kammertrommel 2 ist an einem Verbindungsflansch 14 befestigt, der mit einer Antriebswelle 15, welche als Hohlwelle ausgebildet ist, mittels eines Getriebes 16 mit dem Hauptantrieb 11 verbunden ist. Die Antriebswelle 15 ist mit Wälzlagern 17 direkt am Gestell 3 drehbar gelagert. Innerhalb der als Hohlwelle ausgeführten Antriebswelle 15 ist eine weitere Hohlwelle 18 vorgesehen, welche die Antriebswelle 15 durchsetzt und in dieser gelagert ist. Am freien Ende der Hohlwelle 18 ist eine Steuereinrichtung 19 befestigt, welche von einer Scheibe mit einer Zwangsführung 20 für die Hebelwellen 9 gebildet ist. Die Zwangsführung 20 umfasst eine gekrümmte Kurvenbahn 21, in der die Hebelwellen 9 jeweils mit einem ihrer Hebelwellenenden 9.1, welches mit einer Kurvenrolle 22 versehen ist, formschlüssig umlaufen. Die Hebelwellen 9 sind derart bewegungsmäßig mit der Steuereinrichtung 19 gekoppelt. Eine die Hohlwelle 18 sowie die Antriebswelle 15 durchsetzende Welle 23 ist an ihrem vorderen Ende mit einem Zahnrad 24 versehen. Mittels des Zahnrads 24 kann der Verlauf der gekrümmten Kurvenbahn 21, die zur Zwangsführung 20 der Hebelwellen 9 vorgesehen ist, auf einer segmentartig ausgeführten, mehrteilig verstellbaren Steuereinrichtung 19 verstellt werden. Auf die an sich bekannten Vorzüge und Details einer im laufenden Betrieb justierbaren Kurvenbahn 21 einer Zwangsführung 20 der Hebelwellen 9 soll an dieser Stelle nicht weiter eingegangen werden.

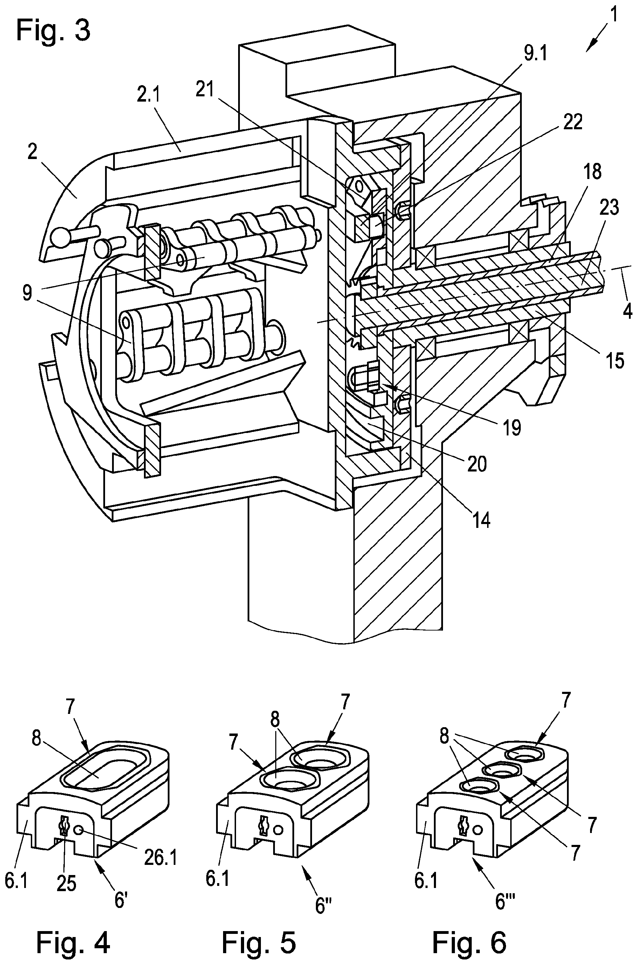

Fig. 3 zeigt die in Fig. 2 dargestellte Ausführungsvariante einer Vorrichtung 1 mit abgezogenen Wechseleinsätzen 6 in einer Schnittdarstellung schräg von der Seite. Hier sind besonders deutlich die Kammertrommelführungen 2.1 an der Kammertrommel 2, die zur formschlüssigen Aufnahme der schlittenartig geformten Wechseleinsätze 6 dienen, zu erkennen.

Die Abbildungen Fig. 4, Fig. 5 und Fig. 6 stellen jeweils unterschiedliche Ausführungsvarianten an austauschbaren Wechseleinsätzen 6 dar, die jeweils passend zum Einsetzen in die freien Umfangsabschnitte 5 der in den Fig. 1 bis Fig. 3 gezeigten Kammertrommel 2 sind.

In Fig. 4 wird eine erste Variante eines Wechseleinsatzes 6' dargestellt, der eine einzige, große Aufnahmekammer 7 mit dem darin befindlichen Verwiegestempel 8 aufweist. Die Aufnahmekammer 7 ist hier beispielsweise mit einem ovalen Querschnitt ausgeführt. Jeweils an den beiden schmalen Längsseiten des Wechseleinsatzes 6' sind Wechseleinsatzführungen 6.1 zur passgenauen, formschlüssigen Aufnahme in den entsprechend komplementär geformten Kammertrommelführungen 2.1, die beispielsweise aus Fig. 3 ersichtlich sind, vorgesehen. An der in Einbaulage vorderen Stirnseite des Wechseleinsatzes 6' ist hier etwa mittig an der Stirnseite eine Öffnung 25 zum Einsetzen eines Abziehwerkzeugs vorgesehen. Mittels eines Abziehwerkzeugs, das in die Öffnung 25 eingeführt wird, kann der Wechseleinsatz 6' besonders komfortabel aus der Kammertrommel 2 herausgeschoben bzw. abgezogen werden.

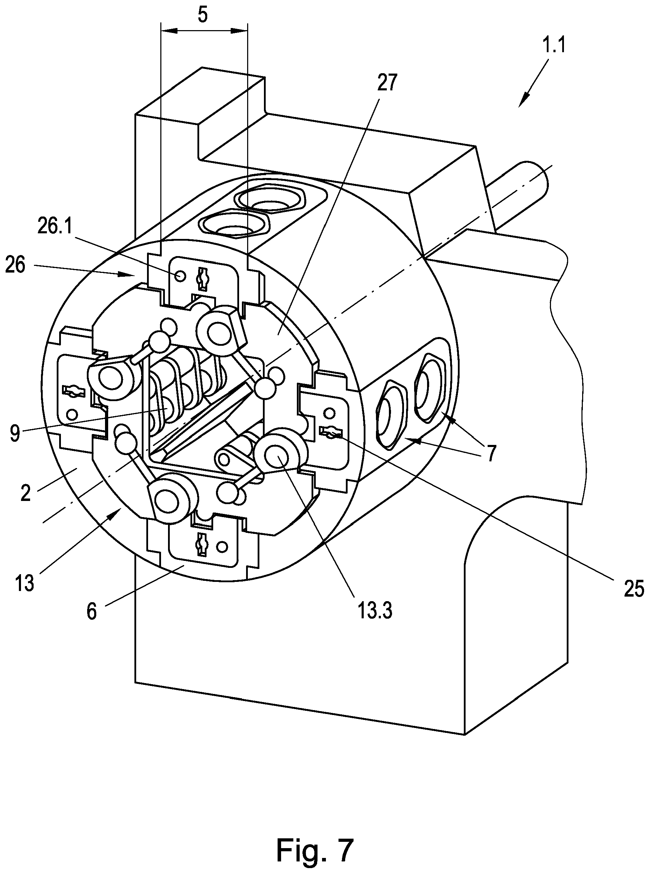

Weiters ist eine Überwachungsschraube 26.1 gekennzeichnet. Eine in Fig. 7 angedeutete Überwachungseinrichtung 26, die zumindest einen Lageerkennungssensor umfasst, stellt beispielsweise anhand der Lage und des Vorhandenseins der Überwachungsschraube 26.1 an den Wechseleinsätzen 6 fest, ob die Wechseleinsätze 6 in Einbaulage richtig in der Kammertrommel 2 positioniert sind.

Der zumindest eine Lageerkennungssensor, der nicht explizit dargestellt ist, ist beispielsweise an der Innentürseite einer hier nicht gezeigten Gehäuseabdeckung der Vorrichtung befestigt. Nach dem Auswechseln der Kammertrommel oder der Wechseleinsätze kann die Vorrichtung beispielsweise nur dann erneut in Betrieb genommen werden, wenn die Gehäuseabdeckung ordnungsgemäß verschlossen und die Überwachungseinrichtung 26 die korrekte Einbaulage der Kammertrommel 2 und/oder der Wechseleinsätze 6 detektiert.

Fig. 5 zeigt eine weitere Ausführungsvariante eines Wechseleinsatzes 6" mit zwei reihenförmig nebeneinander angeordneten Aufnahmekammern 7 bzw. den darin befindlichen Verwiegestempeln 8. Die Aufnahmekammern 7 weisen hier beispielsweise jeweils einen sechseckigen Querschnitt auf.

Fig. 6 zeigt eine dritte Ausführungsvariante eines Wechseleinsatzes 6"', der dieselben Außenabmessungen wie die in Fig. 4 sowie Fig. 5 gezeigten Wechseleinsätze aufweist und der mit drei reihenförmig nebeneinander angeordneten Aufnahmekammern 7 sowie den darin befindlichen Verwiegestempeln 8 versehen ist. Die Aufnahmekammern 7 weisen hier beispielsweise ebenfalls jeweils einen sechseckigen Querschnitt auf

Fig. 7 stellt eine Variante der in Fig. 1 gezeigten Kammertrommel in einer Detailansicht von vorne dar. Die hier gezeigte Vorrichtung 1.1 weist eine Kammertrommel 2 auf, welche mit einer Sicherungseinrichtung 13 umfassend mehrere Arretierhebel 13.3 ausgestattet ist. Die Arretierhebel 13.3 sind dazu an der stirnseitigen Lagerplatte 27 der Kammertrommel 2 angeordnet und ermöglichen beim Auswechseln der Wechseleinsätze 6 ein besonders komfortables sowie schnelles Verriegeln bzw. Entriegeln. Eine Überwachungseinrichtung 26, die die korrekte Einbaulage der Kammertrommel 2 und/oder der Wechseleinsätze 6 beispielsweise anhand der Lage sowie des Vorhandenseins von Überwachungsschrauben 26.1 detektiert, ist hier angedeutet.

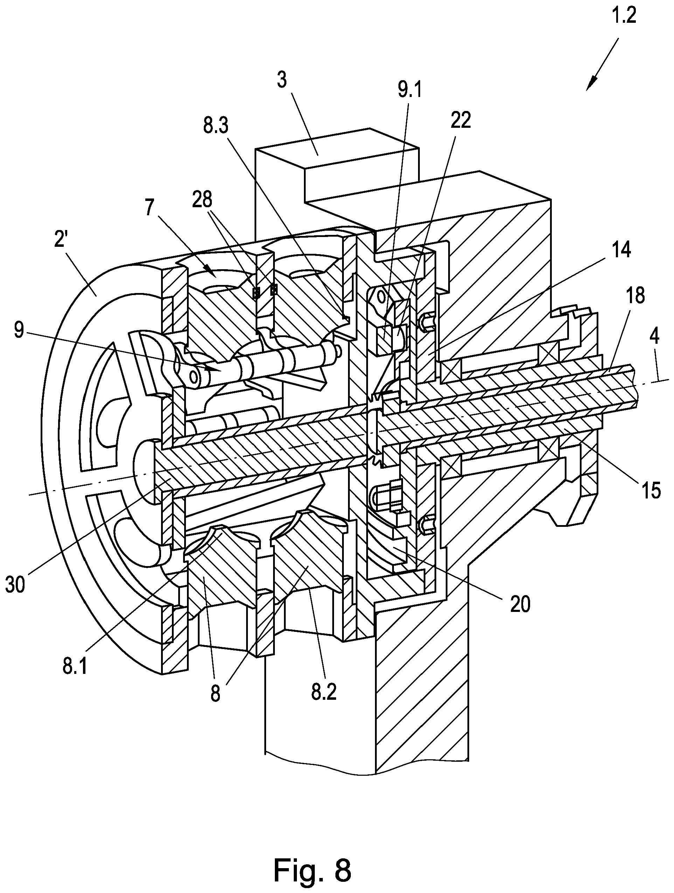

Die Abbildungen Fig. 8 bis Fig. 10 beziehen sich auf eine weitere Variante einer erfindungsgemäßen Vorrichtung 1.2.

Fig. 8 stellt die Vorrichtung 1.2 in einer Schnittansicht schräg von der Seite dar. Die Vorrichtung 1.2 weist eine drehbare Kammertrommel 2' auf, die in Achsenrichtung 4 abnehmbar am Verbindungsflansch 14 befestigbar ist. Der Verstellmechanismus der Verwiegestempel 8 samt den Hebelwellen 9 sowie den Kurvenrollen 22 bleibt hier mit dem Gestell 3 der Vorrichtung 1.2 verbunden und wird beim Auswechseln der Kammertrommel 2' nicht mitgetauscht. Magnethalterungen 28 im Bereich der Aufnahmekammern 7 bieten einen hohen Komfort beim Rüsten der Kammertrommel 2'. Durch die Magnethalterungen 28 wird ein Herausfallen der Verwiegestempel 8 aus den Aufnahmekammern 7 während des Auswechseln der Kammertrommeln 2' verhindert.

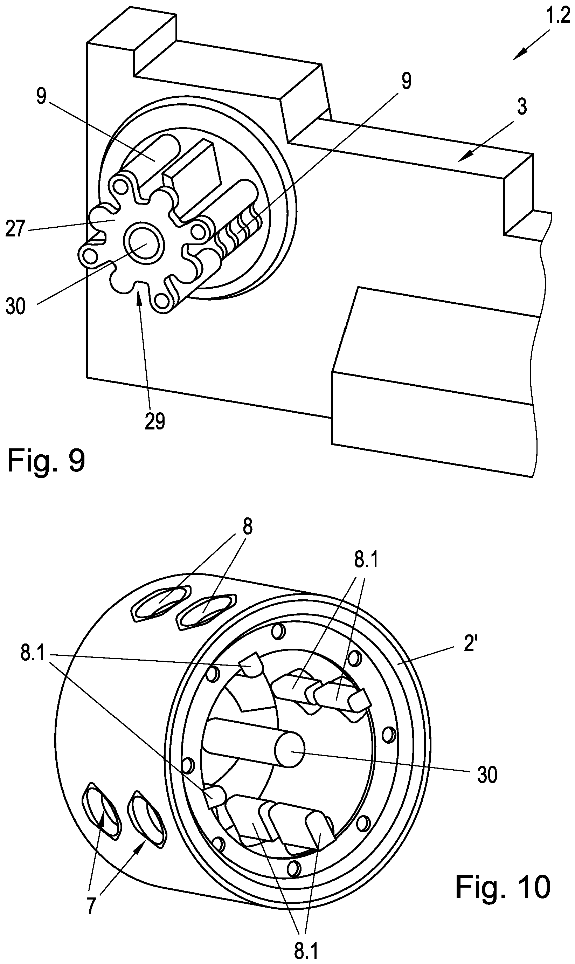

In Fig. 9 ist die in Fig. 8 dargestellte Vorrichtung 1.2 mit abgezogener Kammertrommel 2' in einer Detailansicht schräg von vorne zu sehen. Als Erleichterung beim erneuten Aufsetzen der Kammertrommel 2' sind an der vorderen Lagerplatte 27 Einführungsöffnungen 29 zum Aufnehmen der Stempelhälse 8.1 der Verwiegestempel 8 vorgesehen. Ein Führungsdorn 30 der Kammertrommel 2' wird dazu in Achsenrichtung 4 in eine zentrale Ausnehmung bzw. Führungshülle 31 mittig der Lagerplatte 27 eingeschoben.

Fig. 10 zeigt im Detail die in Fig. 8 dargestellte Kammertrommel 2' im von der Vorrichtung 1.2 abgezogenen Zustand. Die Verwiegestempel 8 verbleiben dabei jeweils in den Aufnahmekammern 7 und werden gemeinsam mit der Kammertrommel 2' ausgewechselt. Im Inneren der Kammertrommel 2' sind die Stempelhälse 8.1 der Verwiegestempel 8 zu erkennen.

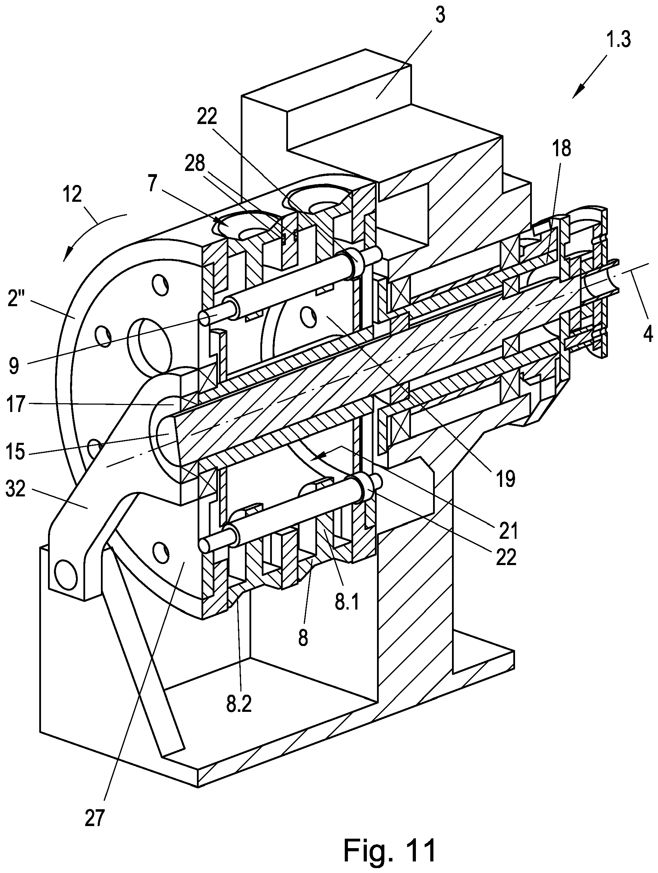

Die Abbildungen Fig.11 bis Fig. 13 beziehen sich auf eine weitere Ausführungsvariante einer erfindungsgemäßen Vorrichtung 1.3.

Fig. 11 zeigt die Vorrichtung 1.3 in einer Schnittansicht von der Seite. Die Kammertrommel 2" ist in dieser Ausführung gemeinsam mit dem in ihrem Innenraum angeordneten Verstellmechanismus zum Verstellen der Verwiegestempel 8, umfassend die Hebelwellen 9, die an den Hebelwellenenden 9.1 vorgesehenen Kurvenrollen 22 sowie die Steuereinrichtung 19, komplett vom Gestell 3 der Vorrichtung 1.3 abnehmbar ausgeführt. Zum Auswechseln wird die Kammertrommel 2" dazu in Achsenrichtung 4 von der Antriebswelle 15 abgezogen bzw. umgekehrt auf die Antriebswelle 15 aufgeschoben. Der Antrieb der Kammertrommel 2" kann direkt mittels der Antriebswelle 15 erfolgen, mit der die Kammertrommel 2" drehfest verbunden wird. Die Kammertrommel 2" wird dabei mit einer zentralen Führungshülle 31 auf der Antriebswelle 15 positioniert. Alternativ dazu kann die Kammertrommel 2" auch an dem Verbindungsflansch 14 befestigt werden und der Antrieb der Kammertrommel 2" erfolgt beispielsweise über den mit einer Hohlwelle 18 verbundenen Verbindungsflansch 14.

Am freien Ende der Antriebswelle 15 befindet sich hier ein Lagerbügel 32, der beispielsweise ein Wälzlager 17 zur Aufnahme der Antriebswelle 15 trägt und als zweites bzw. weiteres Lager der Antriebswelle 15 dient. Diese Ausführung bietet insbesondere bei Kammertrommeln 2" mit großer Baulänge mit mehrreihig angeordneten Aufnahmekammern 7 den Vorteil, dass die Lagerung der Kammertrommel 2" jeweils an ihren beiden Stirnseiten erfolgt. Die Gewichtsverteilung der Kammertrommel 2" wird somit deutlich verbessert. Zum Auswechseln der Kammertrommel 2" wird der Lagerbügel 32 einfach zur Seite geschwenkt bzw. von der Antriebswelle 15 abgenommen.

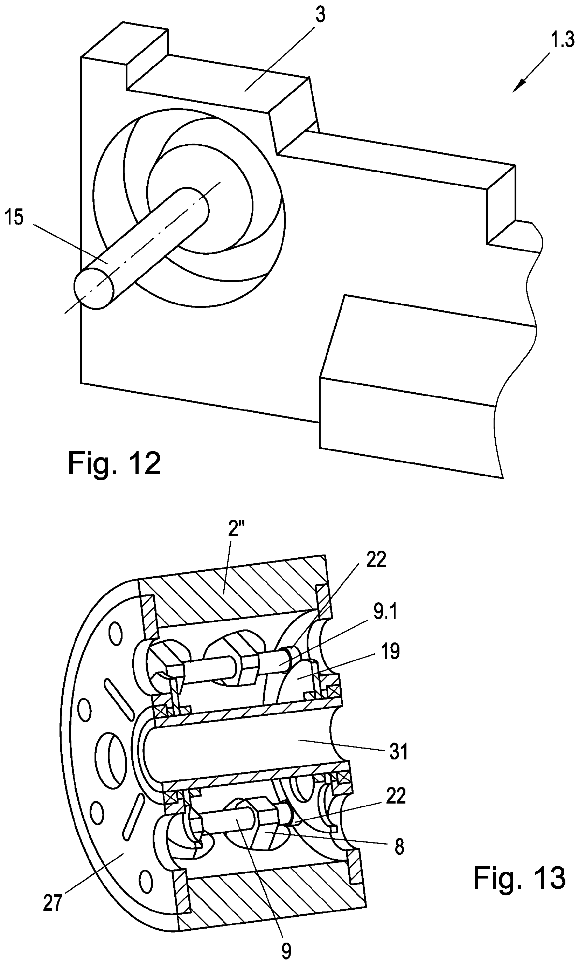

Fig. 12 zeigt die in Fig. 11 dargestellte Vorrichtung 1.3 mit abgezogener Kammertrommel 2" in einer Detailansicht von vorne.

Fig. 13 gibt in einer Detaildarstellung im Schnitt die in Fig. 11 gezeigte Kammertrommel 2" im abgenommenen Zustand wieder. Der im Inneren der Kammertrommel 2" angeordnete Verstellmechanismus der Verwiegestempel 8 wird hier gemeinsam mit der Kammertrommel 2" komplett gewechselt.

**Liste der Positionsnummern:**

| | | | |
|---|---|---|---|
| 1 | Vorrichtung (bzw. 1.1; 1.2; 1.3) | 26 | Überwachungseinrichtung |
| 2 | Kammertrommel (bzw. 2', 2") | 26.1 | Überwachungsschraube |
| 2.1 | Kammertrommelführung | 27 | Lagerplatte |
| 3 | Gestell | 28 | Magnethalterung |
| 4 | Achse | 29 | Einführungsöffnung |
| 5 | Umfangsabschnitt | 30 | Führungsdorn |
| 6 | Wechseleinsatz (bzw. 6', 6", 6"') | 31 | Führungshülle |
| 6.1 | Wechseleinsatzführung | 32 | Lagerbügel |
| 7 | Aufnahmekammer | A | Teigfüllposition |
| 8 | Verwiegestempel | B | Wirkposition |
| 8.1 | Stempelhals (innere Stirnfläche) | C | Teigausschiebeposition |
| 8.2 | äußere Stirnfläche | D | Wechselposition |
| 8.3 | Anschlagkante | | |
| 9 | Hebelwelle | | |
| 9.1 | Hebelwellenende | | |
| 10 | Gehäuse | | |
| 11 | Antrieb | | |
| 12 | Drehrichtung | | |
| 13 | Sicherungseinrichtung | | |
| 13.1 | Verriegelungsring | | |
| 13.2 | Rastbolzen für Verriegelungsring | | |
| 13.3 | Arretierhebel | | |
| 14 | Verbindungsflansch | | |
| 15 | Antriebswelle | | |
| 16 | Getriebe | | |
| 17 | Wälzlager | | |
| 18 | Hohlwelle | | |
| 19 | Steuereinrichtung | | |
| 20 | Zwangsführung | | |
| 21 | gekrümmte Kurvenbahn | | |
| 22 | Kurvenrolle | | |
| 23 | durchsetzende Welle | | |
| 24 | Zahnrad | | |
| 25 | Öffnung für Abziehwerkzeug | | |

## Patentansprüche

1. Vorrichtung (1; 1.1; 1.2; 1.3) zum Portionieren und Wirken von Teig, mit einer um eine Antriebswelle (15) durch einen Hauptantrieb (11) schrittweise drehbaren Kammertrommel (2), die an ihren Umfangsabschnitten (5) mit Aufnahmekammern (7) für die zu wirkenden Teigportionen versehen ist, wobei in jeder Aufnahmekammer (7) ein Verwiegestempel (8) in radialer Richtung der Kammertrommel (2) durch bewegungsmäßige Koppelung mit einer Steuereinrichtung (19) verschiebbar ist, wobei jeder Verwiegestempel (8) mittels einer Hebelwelle (9), die an einem ihrer Hebelwellenenden (9.1) mit einer Kurvenrolle (22) versehen ist, welche Kurvenrolle (22) in einer kurvenförmig gekrümmten Zwangsführung (20) einer Steuereinrichtung (19) aufgenommen ist, bewegungsmäßig mit der Steuereinrichtung (19) gekoppelt ist, **dadurch gekennzeichnet, dass** zumindest ein Umfangsabschnitt (5) der Kammertrommel (2), der zumindest eine Aufnahmekammer (7) aufweist, zusammen mit dem in der Aufnahmekammer (7) befindlichen Verwiegestempel (8) in axialer Richtung abziehbar und aufsteckbar ausgeführt ist.

2. Vorrichtung (1; 1.1; 1.2; 1.3) nach Anspruch 1, **dadurch gekennzeichnet, dass** zumindest zwei Verwiegestempel (8), die jeweils in reihenförmig nebeneinander angeordneten Aufnahmekammern (7) eines Umfangsabschnitts (5) der Kammertrommel (2) vorgesehen sind, mittels einer gemeinsamen Hebelwelle (9) bewegungsmäßig mit der Steuereinrichtung (19) gekoppelt sind.

3. Vorrichtung (1; 1.1) nach Anspruch 1 oder 2, **dadurch gekennzeichnet, dass** zumindest ein Umfangsabschnitt (5) der Kammertrommel (2) als auswechselbarer Wechseleinsatz (6) mit Wechseleinsatzführungen (6.1) versehen formschlüssig in Kammertrommelführungen (2.1) der Kammertrommel (2) ein- und ausschiebbar ausgeführt ist.

4. Vorrichtung (1.2; 1.3) nach Anspruch 1 oder 2, **dadurch gekennzeichnet, dass** die gesamte Kammertrommel (2) zusammen mit sämtlichen in den Aufnahmekammern (7) befindlichen Verwiegestempeln (8) in axialer Richtung abziehbar und aufsteckbar ausgeführt ist.

5. Vorrichtung (1; 1.1; 1.2; 1.3) nach einem der Ansprüche 1 bis 4, **dadurch gekennzeichnet, dass** jeder Verwiegestempel (8) durch mechanische Anschläge (8.3) und/oder durch Magnethalterungen (28) gegen Herausfallen aus der Aufnahmekammer (7) gesichert ist.

6. Vorrichtung (1; 1.1; 1.2; 1.3) nach einem der Ansprüche 1 bis 5, **dadurch gekennzeichnet, dass** jeder Verwiegestempel (8) zumindest während einer mit Teig befüllten Position (A; B; C) der Aufnahmekammer (7) mit seinem Stempelhals (8.1) an der Hebelwelle (9) berührend anliegt.

7. Vorrichtung (1; 1.1; 1.2; 1.3) nach einem der Ansprüche 1 bis 6, **dadurch gekennzeichnet, dass** die drehbar beweglich gelagerte Kammertrommel (2) an einem Verbindungsflansch (14) lösbar befestigbar ist.

8. Vorrichtung (1; 1.1; 1.2; 1.3) nach Anspruch 7, **dadurch gekennzeichnet, dass** der Verbindungsflansch (14) sowie die Steuereinrichtung (19) mittels eines Getriebes (16) mit einem Antrieb (11) gekoppelt sind.

9. Vorrichtung (1; 1.1; 1.2; 1.3) nach einem der Ansprüche 1 bis 8, **dadurch gekennzeichnet, dass** zumindest eine Sicherungseinrichtung (13) zur Sicherung der Kammertrommel (2) und/oder der Wechseleinsätze (6) in Einbaulage vorgesehen ist.

10. Vorrichtung (1; 1.1; 1.2; 1.3) nach einem der Ansprüche 1 bis 9, **dadurch gekennzeichnet, dass** zumindest eine Überwachungseinrichtung (26) zur Überwachung der Einbaulage der Kammertrommel (2) und/oder der Wechseleinsätze (6) vorgesehen ist.

11. Vorrichtung (1; 1.1; 1.2; 1.3) nach Anspruch 10, **dadurch gekennzeichnet, dass** die Überwachungseinrichtung (26) zumindest einen Lageerkennungssensor, vorzugsweise einen optischen und/oder kapazitiven und/oder piezoelektrischen und/oder induktiven Lageerkennungssensor, umfasst.

12. Vorrichtung (1; 1.1; 1.2; 1.3) nach einem der Ansprüche 1 bis 11, **dadurch gekennzeichnet, dass** die Kammertrommel (2) und/oder die Wechseleinsätze (6) aus Kunststoff oder einem mit Kunststoff beschichteten Material, das vorzugsweise Teig abweisend ist, hergestellt ist bzw. sind.

13. Vorrichtung (1) nach einem der Ansprüche 1 bis 12, **dadurch gekennzeichnet, dass** zur Lagerung der Antriebswelle (15) an seinem freien Antriebswellenende (15.1) ein Lagerbügel (32) befestigbar ist.

## Claims

1. A device (1; 1.1; 1.2; 1.3) for portioning and kneading dough, having a chamber drum (2) incrementally rotatable about a drive shaft (15) by way of a main drive (11), which is provided at the circumferential sections (5) thereof with accommodation chambers (7) for the dough portions to be kneaded, wherein in each accommodation chamber (7) there may be slid a weighing stamp (8) in the radial direction of the chamber drum (2) by means of motion-according coupling with a control device (19), wherein each weighing stamp (8) is motion-accordingly coupled with the control device (19) by way of a lever shaft (9), which is provided at one of its lever shaft ends (9.1) with a cam roller (22), which cam roller (22) being housed in a cam-like curved compulsory guiding (20) of a control device (19), **characterized in that** at least one circumferential section (5) of the chamber drum (2), which has at least one accommodation chamber (7), is configured so that it may be removed and re-attached in the axial direction together with the weighing stamp (8) situated in the accommodation chamber (7).

2. A device (1; 1.1; 1.2; 1.3) according to claim 1, **characterized in that** at least two weighing stamps (8), which each are provided in accommodation chambers (7) that are arranged in rows next to each other of a circumferential section (5) of the chamber drum (2), are motion-accordingly coupled with the control device (19) by way of a common lever shaft (9).

3. A device (1; 1.1) according to claim 1 or 2, **characterized in that** at least one circumferential section (5) of the chamber drum (2) is configured as a replaceable replacement insert (6) having replacement insert guidings (6.1), which may formfittingly be inserted into and extracted out of the chamber drum guidings (2.1) of the chamber drum (2).

4. A device (1.2; 1.3) according to claim 1 or 2, **characterized in that** the entire chamber drum (2) is configured so that it may be removed and re-attached in the axial direction together with all weighing stamps (8) situated in the accommodation chambers (7).

5. A device (1; 1.1; 1.2; 1.3) according to any of claims 1 to 4, **characterized in that** each weighing stamp (8) is protected by way of mechanical stops (8.3) and/or magnetic holders (28) against dropping out of the accommodation chamber (7).

6. A device (1; 1.1; 1.2; 1.3) according to any of claims 1 to 5, **characterized in that** each weighing stamp (8) contacts the lever shaft (9) through its stamp neck (8.1) at least in a dough-filled position (A; B; C) of the accommodation chamber (7).

7. A device (1; 1.1; 1.2; 1.3) according to any of claims 1 to 6, **characterized in that** the rotatably provided chamber drum (2) may be releasably attached at a connection flange (14).

8. A device (1; 1.1; 1.2; 1.3) according to claim 7, **characterized in that** the connection flange (14) as well as the control device (19) are coupled with a drive (11) by way of a gearbox (16).

9. A device (1; 1.1; 1.2; 1.3) according to any of claims 1 to 8, **characterized in that** there is provided at least one locking device (13) for securing the chamber drum (2) and/or the replacement inserts (6) in an assembled position.

10. A device (1; 1.1; 1.2; 1.3) according to any of claims 1 to 9, **characterized in that** there is provided at least one monitoring device (26) for monitoring the assembled position of the chamber drum (2) and/or of the replacement inserts (6).

11. A device (1; 1.1; 1.2; 1.3) according to claim 10, **characterized in that** the monitoring device (26) includes at least one position detecting sensor, preferably an optical and/or capacitive and/or piezo-electrical and/or inductive position detecting sensor.

12. A device (1; 1.1; 1.2; 1.3) according to any of claims 1 to 11, **characterized in that** the chamber drum (2) and/or the replacement inserts (6) are prepared or made, respectively, of plastic or of a material coated with plastic, which is preferably dough-repellent.

13. A device (1) according to any of claims 1 to 12, **characterized in that** there may be attached a bearing support (32) at the free end of the drive shaft end (15.1) in order to bear the drive shaft (15).

## Revendications

1. Dispositif (1 ; 1.1 ; 1.2 ; 1.3) pour la division en pâtons et le pétrissage de pâte, avec un tambour à chambres (2) graduellement entraînable en rotation autour d'un arbre d'entraînement (15) au moyen d'un entraînement principal (11), lequel est pourvu sur ses segments périphériques (5) de chambres de réception (7) pour les pâtons à pétrir, dans lequel un poinçon de pesage (8) est déplaçable dans chaque chambre de réception (7) dans la direction radiale du tambour à chambres (2) par couplage mobile avec un dispositif de commande (19), dans lequel chaque poinçon de pesage (8) est couplé de manière mobile à un dispositif de commande (19) au moyen d'un arbre de levier (9) pourvu d'un galet de came (22) à une des ses extrémités (9.1) d'arbre de levier, ledit galet de came (22) étant logé dans un guidage forcé (20) courbé en forme de came du dispositif de commande (19), **caractérisé en ce qu'**au moins un segment périphérique (5) du tambour à chambres (2), lequel comporte au moins une chambre de réception (7), est prévu pour pouvoir être enlevé et enfiché dans la direction axiale avec le poinçon de pesage (8) se trouvant dans la chambre de réception (7).

2. Dispositif (1 ; 1.1 ; 1.2 ; 1.3) selon la revendication 1, **caractérisé en ce qu'**au moins deux poinçons de pesage (8), prévus dans des chambres de réception (7) alignées en rangée respectives d'un segment périphérique (5) du tambour à chambres (2), sont couplés de manière mobile au dispositif de commande (19) au moyen d'un arbre de levier (9) commun.

3. Dispositif (1 ; 1.1) selon la revendication 1 ou 2, **caractérisé en ce qu'**au moins un segment périphérique (5) du tambour à chambres (2) est prévu pour pouvoir être engagé par correspondance de forme dans des glissières (2.1) du tambour à chambres (2) et sorti de celles-ci en tant qu'insert (6) interchangeable pourvu de guidages (6.1) d'insert interchangeable.

4. Dispositif (1.2 ; 1.3) selon la revendication 1 ou 2, **caractérisé en ce que** l'ensemble du tambour à chambres (2) est prévu pour pouvoir être enlevé et enfiché dans la direction axiale, avec tous les poinçons de pesage (8) se trouvant dans les chambres de réception (7).

5. Dispositif (1 ; 1.1 ; 1.2 ; 1.3) selon l'une des revendications 1 à 4, **caractérisé en ce que** chaque poinçon de pesage (8) est fixé par des butées mécaniques (8.3) et/ou par des supports magnétiques (28) pour l'empêcher de chuter de la chambre de réception (7).

6. Dispositif (1 ; 1.1 ; 1.2 ; 1.3) selon l'une des revendications 1 à 5, **caractérisé en ce que** chaque poinçon de pesage (8) repose au contact de l'arbre de levier (9) par son col de poinçon (8.1) au moins pendant une position (A ; B ; C) de la chambre de réception (7) remplie de pâte.

7. Dispositif (1 ; 1.1 ; 1.2 ; 1.3) selon l'une des revendications 1 à 6, **caractérisé en ce que** le tambour à chambres (2) monté de manière rotative peut être fixé de manière amovible sur une bride de connexion (14).

8. Dispositif (1 ; 1.1 ; 1.2 ; 1.3) selon la revendication 7, **caractérisé en ce que** la bride de connexion (14) ainsi que le dispositif de commande (19) sont accouplés à un entraînement (11) par un engrenage (16).

9. Dispositif (1 ; 1.1 ; 1.2 ; 1.3) selon l'une des revendications 1 à 8, **caractérisé en ce qu'**au moins un dispositif de fixation (13) est prévu pour la fixation du tambour à chambres (2) et/ou des inserts interchangeables (6) en position de montage.

10. Dispositif (1 ; 1.1 ; 1.2 ; 1.3) selon l'une des revendications 1 à 9, **caractérisé en ce qu'**au moins un dispositif de surveillance (26) est prévu pour la surveillance de la position de montage du tambour à chambres (2) et/ou des inserts interchangeables (6).

11. Dispositif (1 ; 1.1 ; 1.2 ; 1.3) selon la revendication 10, **caractérisé en ce que** le dispositif de surveillance (26) comprend au moins un capteur de reconnaissance de position, préférentiellement un capteur de reconnaissance de position optique et/ou capacitif et/ou piézoélectrique et/ou inductif.

12. Dispositif (1 ; 1.1 ; 1.2 ; 1.3) selon l'une des revendications 1 à 11, **caractérisé en ce que** le tambour à chambres (2) et/ou les inserts interchangeables (6) sont fabriqués en matière synthétique ou en un matériau revêtu de matière synthétique, empêchant préférentiellement l'adhérence de la pâte.

13. Dispositif (1) selon l'une des revendications 1 à 12, **caractérisé en ce qu'**un étrier de palier (32) peut être fixé pour le montage de l'arbre d'entraînement (15) à son extrémité d'arbre d'entraînement libre (15.1).
